Europäisches Patentamt

(19) European Patent Office     (11) Numéro de publication:     **0 003 457**
Office européen des brevets                                **B1**

(12)                    **FASCICULE DE BREVET EUROPEEN**

(45) Date de publication du fascicule de brevet: **12.08.81**     (51) Int. Cl.³: **G 21 C  13/10, E 04 H  7/18**

(21) Numéro de dépôt: **79400041.4**

(22) Date de dépôt: **23.01.79**

(54) Enceinte de confinement, notamment pour réacteurs nucléaires.

(30) Priorité: **30.01.78 FR 7802498**

(43) Date de publication de la demande:
**08.08.79 Bulletin 79/16**

(45) Mention de la délivrance du brevet:
**12.08.81 Bulletin 81/32**

(84) Etats Contractants Désignés:
**BE DE GB IT NL SE**

(56) Documents cités:
**FR - A - 1 577 543**
**LU - A - 33 557**
**US - A - 2 438 528**
**US - A - 3 320 969**
**US - A - 3 322 141**
**US - A - 3 258 403**
**US - A - 3 778 948**

(73) Titulaire: **COMMISSARIAT A L'ENERGIE**
**ATOMIQUE Etablissement de Caractère**
**Scientifique Technique et Industriel**
**B.P. 510**
**F-75752 Paris Cedex 15 (FR)**

(72) Inventeur: **Costes, Didier**
**11-19, Avenue du Château**
**F-92190 Meudon (FR)**

(74) Mandataire: **Mongredien, André et al,**
**c/o Brevatome 25, rue de Ponthieu**
**F-75008 Paris (FR)**

## Enceinte de confinement, notamment pour réacteurs nucléaires

Il existe dans la technique industrielle un certain nombre de cas où l'on a besoin d'avoir recours à un bâtiment de confinement pour isoler de l'extérieur certaines installations dangereuses parce que susceptibles d'émettre des produits polluants et notamment radioactifs dont les normes de sécurité interdisent le rejet pur et simple dans l'atmosphère. C'est le cas, en particulier des réacteurs nucléaires dont il sera question uniquement dans la suite du texte, étant bien entendu toutefois que cet exemple est fourni à titre non limitatif et que la présente invention s'étend d'une façon générale aux enceintes de confinement pour toute installation capable de rejeter des produits dangereux, à titre temporaire ou permanent.

Les réacteurs nucléaires sont généralement disposés à l'intérieur d'enceintes de confinement, étudiées pour conserver une étanchéité satisfaisante vis-à-vis des produits radioactifs susceptibles de s'échapper du circuit primaire du réacteur lors de certains accidents, notamment des accidents mettant en pression l'intérieur de l'enceinte. Dans certaines réalisations, cette étanchéité est obtenue notamment par une membrane étanche appliquée du côté interne de la paroi en béton armé ou précontraint; dans d'autres réalisations, il a été proposé de constituer l'enceinte sans membrane mais avec une double paroi, un espace intermédiaire entre les deux parois servant à la collecte des gaz, liquides et aérosols susceptibles de traverser les parois interne ou externe à un débit modéré, les deux parois étant indépendantes sur toute l'élévation au-dessus du sol.

Cette disposition procure un excellent confinement vis-à-vis des accidents pour lesquels elle est conçue, mais d'une part elle nécessite la mise en marche d'appareils spéciaux au moment où un accident survient, ce qui oblige à d'importantes précautions de fiabilité, d'autre part, elle ne correspond pas au meilleur emploi des matériaux en ce qui concerne la résistance aux charges extrêmes. En effet, si la pression interne s'accroît au point de causer la fissuration ou la rupture de l'enceinte interne, l'enceinte externe peut recevoir l'intégralité de la pression, et l'on voit que la résistance des deux parois indépendantes en série ne vaut finalement que celle de la plus forte paroi. Pour des contraintes dynamiques dues à des séismes ou a des chocs de projectiles d'origine interne ou externe, on obtient de même, en général, une meilleure résistance en groupant la masse totale des matériaux utilisés pour la construction des parois en une seule enceinte épaisse.

Dans cette optique, on a déjà proposé des enceintes de confinement constituées par une paroi unique en béton armé et notamment précontraint, caractérisée par l'existence d'un réseau drainant dans l'épaisseur de la paroi; c'est le cas notamment des brevets luxembourgois 33.557 et des Etats-Unis n° 3.320.969 et 3.778.948. Dans ces solutions connues, ce réseau drainant est constitué le plus souvent d'un ensemble de trous en forme de canaux tubulaires parallèles, venus de fabrication au moment de la coulée de béton, et dont les mailles sont suffisamment serrées à priori pour qu'une fissure se produisant accidentellement rencontre à coup sûr l'un des canaux ou son environnement poreux s'il existe, permettant ainsi le drainage correspondant de la phase polluante à évacuer. Les trous en forme de canaux tubulaires sont disposés théoriquement selon des directions quelconques dans l'épaisseur de la paroi, bien que, pour des raisons pratiques, il soit plus commode de les réaliser verticaux ou horizontaux, ces deux derniers systèmes pouvant d'ailleurs coexister en comportant éventuellement des points de jonction. On prévoit parfois avantageusement, dans l'épaisseur de la paroi de l'enceinte, une couche spéciale perméable, par exemple en béton poreux, dans laquelle sont placés les canaux de drainage, ce qui accroît l'efficacité du dispositif; on réalise également parfois, lors de la coulée du béton, des inclusions de bandes perméables constituées de tubes remplis de gravier et qui joignent entre eux les canaux de drainage de l'un des systèmes horizontal ou vertical.

Les réseaux de drainage connus équipant les enceintes de confinement sont reliés généralement à une installation d'aspiration des fuites au travers de filtres externes; le fluide circulant dans le réseau de drainage est le plus souvent gazeux et l'on draine dans le dit réseau mis en dépression à l'aide d'un ventilateur extracteur et d'un filtre externe à l'enceinte, à la fois la phase gazeuse interne éventuellement polluante et l'air extérieur qui auraient tendance à traverser la paroi de l'enceinte supposée fissurée à la suite d'un accident, d'origine interne ou externe. Cette phase gazeuse est ensuite rejetée, après filtration, dans l'atmosphère extérieure. Dans toutes ces solutions connues, on est toutefois tributaire de systèmes d'aspiration ou de mise en dépression mécaniques, dont dépend en fin de compte la sécurité de l'installation et qui ne peuvent conduire par conséquent à une fiabilité totale.

La présente invention a pour objet une enceinte de confinement pourvue d'un réseau sous pression agissant comme barrage, qui permet d'éviter l'inconvénient rappelé précédemment, tout en combinant les avantages de solidité d'une paroi unique épaisse avec ceux d'une reprise des fuites dans une couche intermédiaire située dans l'épaisseur de la paroi.

Cette enceinte de confinement se caractérisé essentiellement en ce que son réseau est sous pression et en ce qu'elle peut fonctionner à la limite de façon entièrement passive, sans nécessiter le recours à une source quelconque d'énergie extérieure, ce qui lui confère une fiabilité remarquable en cas d'accident.

L'enceinte de confinement selon l'invention peut se présenter principalement sous deux modes de mise en oeuvre distincts.

Dans le premier mode de mise en oeuvre, on relie simplement le réseau de barrage à des filtres passifs, internes à l'enceinte et l'on met le réseau sous pression par rapport à l'espace interne de l'enceinte en le reliant par exemple à des ventilateurs situés dans l'enceinte; on réalise de cette façon avec des moyens très simples et sûrs, une protection valable contre le cas assez général, statistiquement, d'un accident conduisant à une pollution de l'intérieur de l'enceinte accompagnée d'une surpression de celle-ci: la surpression suffit alors à faire sortir à l'extérieur, par les filtres et le système de barrage, la majeure partie de la phase gazeuse interne polluée, c'est-à-dire que l'installation oblige d'elle-même à passer par les filtres passifs tout le fluide gazeux dangereux susceptible de s'échapper et ce sans l'emploi d'aucun organe de pompage ou d'aspiration. L'intérêt de ce mode de mise en oeuvre réside dans le fait que la filtration de la phase gazeuse polluée subsiste en grande partie, même dans le cas d'une défaillance des ventilateurs de mise en pression du réseau.

Dans le deuxième mode de mise en oeuvre du réseau de barrage, le fluide qui y circule est un liquide sous pression hydrostatique, le plus souvent de l'eau. Cette eau sous pression constitue ainsi une véritable nappe de barrage dans l'épaisseur de la paroi de l'enceinte et s'écoule aussi bien vers l'intérieur que vers l'extérieur en cas de fissuration grave de cette dernière, empêchant ainsi la sortie du milieu interne dangereux. Pratiquement, on parvient à ce résultat en divisant le réseau de barrage en plusieurs zones ou sous-ensembles indépendants, dont chacune est reliée à au moins un réservoir d'eau situé à un niveau supérieur à celui de la zone correspondante; une zone particulière peut être constituée dans ce cas par le radier de l'enceinte de confinement elle-même.

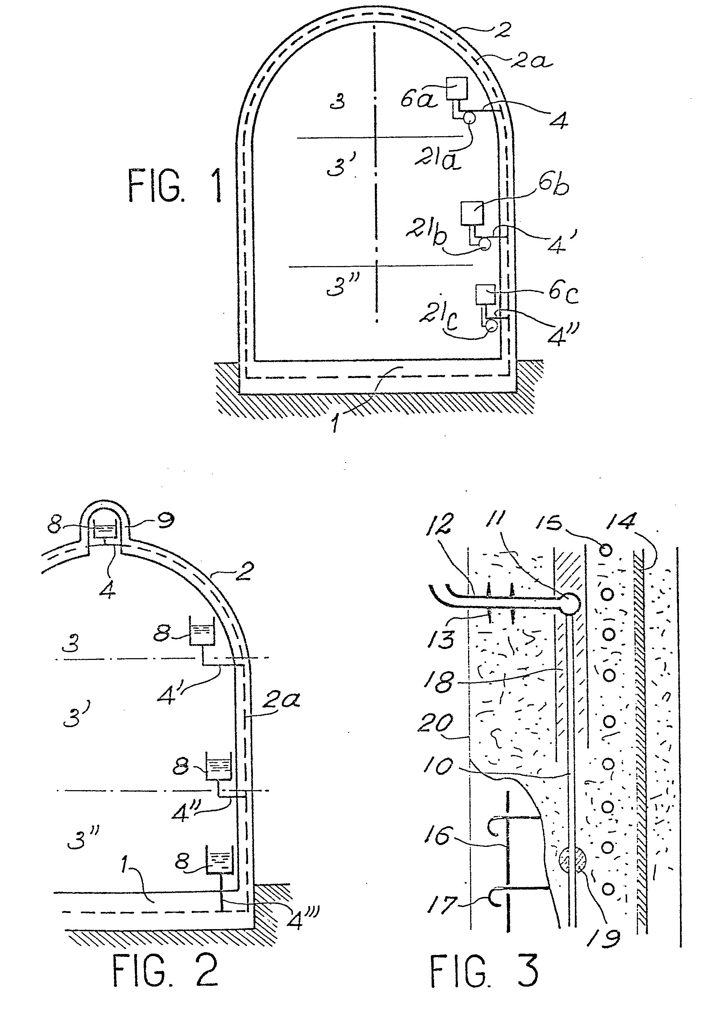

De toute façon, l'invention sera mieux comprise en se référant à la description qui suit de deux exemples de mise en oeuvre d'une enceinte de confinement pour réacteur nucléaire, conforme à l'invention. Cette description qui sera faite à titre illustratif et non limitatif se réfère aux figures 1 à 3 sur lesquelles:

— la figure 1 représente en coupe schématique une enceinte de confinement équipée d'un système de drainage relié à des filtres passifs internes;

— la figure 2 représente en coupe schématique une enceinte de confinement équipée d'un système de drainage mis sous pression hydrostatique;

— la figure 3 représente en détail la réalisation de la paroi de l'une des enceintes des figures 1 et 2.

L'enceinte de confinement avec aspiration des fuites selon la figure 1 comporte une paroi constituée d'un radier général 1 et d'un bâtiment en élévation 2, le tout en béton armé et précontraint, les armatures n'étant pas représentées non plus que le réacteur nucléaire qu'elle renferme. L'épaisseur de la paroi du bâtiment est par exemple de l'ordre de 1/20 à 1/10 du rayon. Le réseau de barrage 2a représentée par un trait tireté est constituée en zones ou sous-ensembles juxtaposés tels que 3, 3', 3'', chacun aboutissant à un collecteur 4, 4', 4''; on a placé les filtres tels que 6a, 6b, 6c à l'intérieur de l'enceinte, et ils sont reliés au réseau 2a par des ventilateurs tels que 21a, 21b, 21c, mettant le réseau en surpression par rapport à l'espace interne. Il s'agit donc là d'un système de barrage. En l'absence d'accident, les ventilateurs fonctionnent normalement à puissance réduite et l'on peut détecter, grâce à des dispositifs non représentés, les zones de fuites préférentielles afin d'y porter remède. En cas d'accident, la puissance des ventilateurs 21 est accrue pour maintenir le réseau 2a en surpression par rapport à l'intérieur et donc y interdire l'introduction de la pollution; les fuites vers l'extérieur proviennent ainsi d'un gaz préalablement filtré. En cas de défaillance des ventilateurs 21a, 21b, cette filtration subsiste en grande partie, dans la mesure où les filtres 6a, 6b, 6c sont beaucoup plus perméables que la paroi séparant l'intérieur de l'enceinte et le réseau 2a.

L'enceinte de confinement avec barrage par de l'eau selon la figure 2, identique dans l'ensemble à la précédente, s'en distingue par le fait que chaque région de barrage est connectée à un réservoir d'eau tel que 8 à l'intérieur de l'enceinte, à un niveau supérieure à celui de la région concernée. On obtient ainsi automatiquement, en cas d'accident avec mise en pression interne, une adaptation de la pression d'eau de barrage. Pour la région supérieure de l'enceinte, on peut disposer le réservoir dans un clocheton 9 dont l'étanchéité ne peut être assurée par le liquide de barrage lui-même, mais qui peut être spécialement résistant pour éviter un accroissement local des risques; on peut aussie disposer le réservoir à l'intérieur de l'enceinte et faire appel à une pompe automatique pour compléter la mise en charge. Le rôle de cette eau de barrage est de constituer un véritable mur liquide de protection et de s'échapper en priorité en cas de fissuration grave, à la place du milieu interne pollué. Elle procure également un avantage auxiliaire important qui découle du fait qu'elle humecte continuellement le béton dans sa partie centrale et par là en empêche le retrait et la fissuration en le maintenant étanche. L'eau utilisée est avantageusement traitée par des additifs basiques pour éviter, en cas de circulation continue par une fuite, la détérioration du béton et la corrosion des armatures, mais on doit bien entendu s'attacher à obtenir par construction une excellent étanchéité des parois, et à la reconstituer en cas de détérioration locale, aisée à détecter du fait des taches d'humidité. On peut aussie être conduit dans certains pays à incorporer à l'eau des additifs anti-gel. En régime normal, la surveillance du niveau des réservoirs permet d'évaluer l'étanchéité obtenue; en cas d'accident, on peut réalimenter ces réservoirs avec de l'eau de refroidissement de secours du réacteur, non polluée, pour parer toute fuite externe de radioactivité. On peut envisager des essais périodiques d'étanchéité par mise en haute pression des réseaux.

Dans l'exemple de la figure 2, le réseau 2a s'étend au radier 1 de l'enceinte 2 et est mis en communication par le conduit 4''' avec un réservoir d'eau 8 correspondant. Une telle protection du radier 1 s'avère très utile pour pallier les conséquences de l'accident grave que représente la fusion du coeur d'un réacteur nucléaire, auquel cas le radier en béton armé est le principal obstacle sur le chemin des matériaux fondus provenant du coeur et de la cuve.

En effet, dans un accident de ce genre les matériaux fondus progressent d'abord vers le bas en s'étalant latéralement, décomposant les hydrates avec libération d'eau et réduction de cette eau par les métaux, d'où production d'hydrogène, et les carbonates avec libération de gaz carbonique. Un front thermique dans le béton précède l'attaque chimique et la favorise en raison des contraintes thermiques qui provoquent une intense fissuration. Lorsque ce front arrive à la région des canaux sous pression d'eau, la fissuration provoque des fuites vers le haut et celles-ci refroidissent le béton, tandis que l'eau s'évapore et que la vapeur, mise au contact de la masse fondue, s'échappe sous forme de bulles, provoquant ainsi le refroidissement de béton. La descente des matériaux fondus peut ainsi s'arrêter, un peu au-dessus du lit de canaux.

Bien entendu, le pas et le diamètre de ces canaux sont à optimiser, de même que la pression d'eau, et l'on peut envisager sous la cuve plusieurs lits de canaux de diamètres différents.

La figure 3 représente en coupe une paroi verticale 20 équipée d'un système de drainage selon l'invention. On a représenté des canaux verticaux 10 dont la réalisation paraît plus aisée, mais les canaux pourraient aussi bien être horizontaux, et périphériques. Ils sont obtenus à la coulée du béton, de manière connue, en disposant dans le coffrage des tubes de caoutchouc gonflés à l'eau maintenus rectilignes par des tiges internes d'acier pour résister aux déviations dues aux efforts lors de la mise en place du béton; ces tiges et ces tubes peuvent être aisément retirés après la prise du béton, sur des hauteurs dépassant 10 m. Un ensemble de tubes verticaux est relié par un collecteur supérieur 11 à un tube de liaison 12 avec le réservoir correspondant, non figuré. L'étanchéité qui est requise autour du tube 12 dans sa traversée de la partie interne de la paroi 20 peut être obtenue grâce à des dispositifs connus tels que des disques de garde 13 combinés avec une injection de mortier de ciment entre les disques. On a figuré dans le mur des armatures de précontraintes verticales telles que 14 et horizontales telles que 15, et des aciers de liaison tels que 16 et 17 permettant en particulier d'éviter un éventuel feuilletage de la paroi dans le sens de l'épaisseur.

Le réseau des canaux de barrage ou de réalimentation peut être placé soit dans le béton ordinaire de construction de la paroi, soit dans une couche spéciale perméable 18, notamment en béton à grand indice de vides. On peut encore disposer à la coulée dans le béton des inclusions perméables disposées en bandes horizontales telles que 19 joignant les canaux verticaux, ces inclusions étant constituées par des tubes perméables remplis de gravier. La disposition de l'ensemble des canaux et des éventuels dispositifs perméables supplémentaires doit être telle que, dans l'hypothèse d'une fissuration de la paroi 20 due à une surcharge, on puisse négliger le risque d'une traversée directe de la paroi, sans mise en communication avec le réseau de barrage. On peut envisager, dans un mur d'épaisseur de 2 m, un réseau constitué de canaux de diamètre 0,04 m à l'écartement de 0,5 m.

Une enceinte de confinement selon l'invention présente donc, par rapport aux enceintes connues, les avantages d'une réalisation très aisée et d'une étanchéité quasi parfaite dans les cas d'accidents qui peuvent être prévus, tout en procurant une résistance aux charges extrêmes aussi grande que le permet la masse de matériaux utilisés. Les particularités décrites pour la paroi avec réseau de barrage ou de réalimentation incorporé s'étendent évidemment à des réalisations variées, notamment en construction souterraine.

**Revendications**

1. Enceinte de confinement (1,2) notamment pour réacteur nucléaire, du genre de celles qui sont constituées en béton armé, éventuellement précontraint, et comportent dans l'épaisseur de leur paroi un réseau de barrage (2a) constitué de canaux tubulaires ménagés dans le béton, caractérisée en ce que les canaux tubulaires (10) du réseau (2a), éventuellement groupés en sous-ensembles, sont reliés à un système de filtres (6a, 6b, 6c) situés à l'intérieur de l'enceinte et en ce que le réseau est en surpression par rapport à l'espace interne de l'enceinte.

2. Enceinte de confinement (1,2) notamment pour réacteur nucléaire, du genre de celles qui sont constituées en béton armé, éventuellement précontraint, et comportent dans l'épaisseur de leur paroi un réseau de barrage (2a) constitué de canaux tubulaires (10) ménagés dans le béton, caractérisée en ce que les canaux tubulaires (10) du réseau (2a) sont groupés en un certain nombre de zones (3, 3', 3'') correspondant chacune à une tranche de hauteur, les canaux tubulaires de chaque zone (3, 3', 3'') étant remplis d'un liquide en communication avec un réservoir (8) à niveau libre situé à l'intérieur de l'enceinte, à un niveau supérieur à celui de la tranche considérée.

3. Enceinte de confinement selon la revendication 2, caractérisée en ce que le radier (1) de l'enceinte est également muni d'un réseau (2a) rempli d'un liquide sous pression, par communication avec un réservoir (8) à niveau libre à l'intérieur de l'enceinte.

## Claims

1. A containing enclosure (1, 2) particularly for nuclear reactors, of the type made of reinforced, optionally prestressed concrete and comprising in the thickness of their wall a barrier network (2a) formed by tubular passages formed in the concrete, characterised in that the tubular passages (10) of the network (2a), optionally grouped into sub-assemblies, are connected to a system of filters (6a, 6b, 6c) situated inside the enclosure and in that the network is under excess pressure in relation to the inner space of the enclosure.

2. A containing enclosure (1, 2), particularly for nuclear reactors, of the type made of reinforced, optionally prestressed concrete and comprising in the thickness of their wall a barrier network (2a) formed by tubular passages (10) formed in the concrete, characterised in that the tubular passages (10) of the network (2a) are grouped into a certain number of zones (3, 3', 3'') each corresponding to a level or height sector, the tubular passages of each zone (3, 3', 3'') being filled with a liquid in communication with a reservoir (8) at a free level situated inside in the enclosure to a level above that of the sector in question.

3. A containing enclosure as claimed in Claim 2, characterised in that the foundation (1) of the enclosure is also provided with a network (2a) filled with a liquid under pressure by communication with a reservoir (8) at a free level inside the enclosure.

## Patentansprüche

1. Sicherheitsbehälter (1, 2), insbesondere für einen Kernreaktor, nach Art derjenigen, die aus gegebenenfalls vorgespanntem Stahlbeton bestehen, mit einem in der Dicke seiner Wand angeordneten Sperrgitter, bestehend aus im Beton angeordneten rohrförmigen Kanälen, dadurch gekennzeichnet, dass die gegebenenfalls in Unteranordnungen gruppierten rohrförmigen Kanäle (10) des Gitters (2a) mit einem System von innerhalb des Behälters angeordneten Filtern (6a, 6b, 6c) verbunden sind, und dass das Gitter gegenüber gem Innenraum des Behälters unter Überdruck steht.

2. Sicherheitsbehälter (1, 2), insbesondere für einen Kernreaktor, nach Art derjenigen, die aus gegebenenfalls vorgespanntem Stahlbeton bestehen, mit einem in der Dicke seiner Wand angeordnetem Sperrgitter, bestehend aus im Beton angeordneten rohrförmigen Kanälen, dadurch gekennzeichnet, dass die rohrförmigen Kanäle (10) des Gitters (2a) in einer gewissen Anzahl von Zonen (3, 3', 3'') gruppiert sind, von denen jede einem Höhenstreifen entspricht, wobei die rohrförmigen Kanäle jeder Zone (3, 3', 3'') mit einer Flüssigkeit gefüllt sind, die in Verbindung steht mit einem Vorratsbehälter (8) mit freiem Niveau innerhalb des Sicherheitsbehälters und einem Niveau, das höher als dasjenige des betrachteten Streifens ist.

3. Sicherheitsbehälter nach Anspruch 2, dadurch gekennzeichnet, dass der Boden (1) des Sicherheitsbehälters ebenfalls mit einem Gitter (2a) versehen ist, das mit einer unter Druck stehenden Flüssigkeit gefüllt ist durch Verbinden mit einem Vorratsbehälter (8) mit freiem Niveau innerhalb des Sicherheitsbehälters.

FIG. 1

FIG. 2

FIG. 3